# EUROPEAN PATENT APPLICATION

(11) **EP 4 834 490 A1**
(43) Date of publication of application: **04.11.2026**
(21) Application number: 24943109.9
(22) Date of filing: 21.08.2024
(51) Int. Cl.: B05C 11/11, B05C 11/10, B01F 27/90, H01M 4/139

(54) **HOLDING TANK AND COATING APPARATUS**

(30) Priority: 14.06.2024 CN 202421360428 U
(71) Applicant: Contemporary Amperex Technology Co., Limited, Ningde, Fujian 352100 (CN)
(72) Inventor: ZHANG, Yulong, Ningde, Fujian 352100 (CN); LIU, Bing, Ningde, Fujian 352100 (CN); HUANG, Chengpeng, Ningde, Fujian 352100 (CN); LI, Neng, Ningde, Fujian 352100 (CN)
(74) Representative: Lorenz Seidler Gossel Part. mbB
(86) International application number: PCT/CN2024/113755
(87) International publication number: WO 2025/255952

(57) **Abstract**

A holding tank (2) and a coating apparatus. The holding tank (2) comprises: a tank body (21), a cover body (22) and a discharge pipe (230), wherein the tank body (21) is provided with an accommodating cavity, the accommodating cavity is provided with a feed inlet (211) and a discharge port, the tank body (21) is provided with a first handle (212), the cover body (22) is detachably mounted at the feed inlet (211) and is used for opening or closing the feed inlet (211), the discharge pipe (230) is provided at the discharge port, and the discharge pipe (230) is provided with a valve (24) for opening or closing the discharge pipe (230). The holding tank can better store slurry, and can reduce the waste of slurry.

## Description

### CROSS-REFERENCE TO RELATED APPLICATIONS

This disclosure claims priority to Chinese Patent Application No. 202421360428.2 filed on June 14, 2024, which is incorporated herein by reference in its entirety.

### TECHNICAL FIELD

This disclosure relates to the field of batteries, and in particular, to a transfer tank and a coating device.

### BACKGROUND

In the production of lithium-ion batteries, both the positive electrode and the negative electrode need a coating process where active substances, conductive agents, binders, and the like are mixed to form a slurry, and then the slurry is uniformly applied to a current collector (usually an aluminum foil for the negative electrode and a copper foil for the positive electrode). The slurry is usually prepared by stirring: the active substance powder, binder, conductive agent, and solvent can be stirred and mixed well in a certain order and under certain conditions to form a stable suspension.

On a continuous production line, the operating speed and production capacity of the coating machine may not completely match the slurry preparation speed, so a transfer tank is often provided on the production line as a transition link. The transfer tank can balance the production differences of upstream and downstream equipment to a certain extent, and maintain the continuous and stable operation of the production line. In addition, the transfer tank can also help the slurry further mature and homogenize, so that various components (such as active substances, conductive agents, binders, and solvents) in the slurry are more uniformly distributed during the standing process, thereby improving the quality of the electrode sheet and the uniformity of battery performance. However, in the related art, after the transfer tank stores the preliminarily mixed slurry from the stirring tank, when the slurry in the transfer tank is used, it is often necessary to transfer the slurry in the transfer tank to a target container, which is likely to cause waste of the slurry.

### SUMMARY

This disclosure aims to solve at least one of the technical problems existing in the prior art. For this, an objective of this disclosure is to provide a transfer tank, and the transfer tank can better store the slurry and reduce the waste of the slurry.

This disclosure also provides a transfer assembly having the transfer tank of the above embodiments.

This disclosure also provides a coating device having the transfer tank of the above embodiments.

According to a first aspect, the transfer tank according to embodiments of this disclosure includes: a tank body, a cover, and a discharging pipe, the tank body having an accommodating cavity, the accommodating cavity having a feeding inlet and a discharging outlet, the cover being detachably mounted at the feeding inlet for opening or closing the feeding inlet, the discharging pipe being provided at the discharging outlet, and a valve being provided on the discharging pipe for opening or closing the discharging pipe.

In the above technical solution, by providing the feeding inlet and the cover on the tank body, the slurry can be better stored in the tank body, and external impurities, dust, microorganisms, and other pollutants can be better prevented from entering the transfer tank, ensuring that the slurry is not affected. By providing the discharging pipe and the valve, the valve can control the on-off of the discharging pipe. By controlling the valve, the slurry conveyed by the discharging pipe can be directly applied to the electrode sheet. Thus, there is no need to provide a target container, nor to transfer the slurry in the transfer tank to the target container, which can reduce the waste of the slurry during the transfer process, thereby better reducing costs.

In some embodiments of this disclosure, the tank body is provided with a first handle.

In the above technical solution, by providing the first handle on the tank body, the tank body can be better carried, which facilitates flexible transfer of the tank body.

In some embodiments of this disclosure, at least part of a top wall of the tank body is configured to have the feeding inlet.

In the above technical solution, by providing the feeding inlet at an upper end of the tank body, the slurry can better enter the accommodating cavity, and the slurry can directly enter the tank body in a pouring form, which can produce a stirring effect on the slurry to a certain extent, thereby facilitating more uniform various components in the slurry.

In some embodiments of this disclosure, the discharging outlet is provided in a bottom wall of the tank body.

In the above technical solution, the slurry can be conveyed outward from the bottom, which can better reduce the residue of the slurry in the tank body.

In some embodiments of this disclosure, the discharging pipe is a straight pipe extending in an up-down direction.

In the above technical solution, after the slurry enters the discharging pipe from the discharging outlet, it can better flow out from the discharging pipe, which can reduce the residue of the slurry in the discharging pipe.

In some embodiments of this disclosure, the transfer tank further includes a stirring assembly, the stirring assembly is mounted on the cover, the stirring assembly includes a driving member and a stirring member provided on an output shaft of the driving member, the driving member is located outside the accommodating cavity, the stirring member is located inside the accommodating cavity, and the driving member is configured to drive the stirring member to operate.

In the above technical solution, by mounting the stirring assembly on the cover, when the cover covers the tank body, the stirring member of the stirring assembly directly extends into the accommodating cavity. This is a simple and convenient mounting method. Through the stirring of the stirring member, the slurry can be better prevented from layering after being left standing for a long time; otherwise, such layering affects the uniformity of various components in the slurry.

In some embodiments of this disclosure, the driving member includes: a pneumatic pump and a coupling, the coupling being in transmission connection between the pneumatic pump and the output shaft.

In the above technical solution, the pneumatic pump is used as the driving mechanism, and the pneumatic pump has a simple structure and is convenient for maintenance. As compared with the driving of a motor, it can reduce the risk of electrical failure. Moreover, the pneumatic pump can control the output flow by adjusting the air source pressure, with good stability. By providing the coupling between the pneumatic pump and the output shaft, torque can be better transmitted to the output shaft, and the coupling can better ensure the stability between the pneumatic pump and the driving shaft, and can compensate for axial and radial displacements to a certain extent, playing roles such as reducing impact and absorbing vibration.

In some embodiments of this disclosure, the cover is provided with a second handle, two second handles are provided, and the two second handles are respectively provided on two sides of the driving member.

In the above technical solution, the cover can be opened or closed manually, which can reduce mechanical costs. It can be understood that the transfer tank of this disclosure is used only when there is a need to store the slurry, and can be transferred at any time in terms of distance and space. Therefore, there is no need to build an automated device for automatically opening or closing the cover, and in the way of manually opening or closing the cover, the transfer tank can be more flexibly used to store the slurry.

In some embodiments of this disclosure, the stirring member includes a stirring blade, the stirring blade having a mounting slot penetrating the stirring blade in a thickness direction thereof, the mounting slot extending along an axial direction of the output shaft, and the output shaft being inserted into the mounting slot.

In the above technical solution, through the cooperation between the output shaft and the stirring blade in an insertion manner, the assembly manner of the stirring blade and the output shaft is simple, maintenance is convenient, and the output shaft can better drive the stirring blade to rotate.

In some embodiments of this disclosure, the stirring blade is symmetrical along an axis of the output shaft.

In the above technical solution, the stirring blade is symmetrical along the axis of the output shaft, a plurality of flow-through holes are provided, and the plurality of flow-through holes are symmetrically provided along the axis of the output shaft, which can make the stirring blade stir the slurry in the tank body more uniformly, and can make various components in the slurry more uniformly distributed.

In some embodiments of this disclosure, the tank body is a cylindrical structure.

In the above technical solution, by making the tank body a cylindrical structure, the space for the tank body to accommodate the slurry can be better increased.

In some embodiments of this disclosure, two first handles are provided, and the two first handles are respectively provided on two sides of the transfer tank.

In the above technical solution, by providing two symmetrically arranged first handles on the tank body, the tank body can be better carried manually, and by carrying the tank body manually, flexible transfer of the tank body can be facilitated.

According to a second aspect, embodiments of this disclosure further provide a coating device, including a transfer assembly, the transfer assembly including the transfer tank provided by embodiments of the first aspect of this disclosure, the coating device further including a transfer coater, the transfer coater having a loading platform, and the tank body of the transfer tank being detachably mounted on the loading platform.

In the above technical solution, since the transfer tank can directly coat the electrode sheet, it can not only reduce the transfer of the slurry, thereby reducing the waste of the slurry during the slurry transfer process and lowering costs, but also increase the feeding method of the coating machine, that is, there is no need to feed the transfer coater in a pipeline manner, and the way of using the transfer tank for feeding can increase the number of simultaneous coatings by the transfer coater. By increasing the number of transfer coaters, the coating efficiency of the electrode sheet can be improved, and the production capacity can be improved.

In some embodiments of this disclosure, the transfer assembly further includes a material rack, the material rack having a material platform, a plurality of transfer tanks are provided, and the plurality of transfer tanks are placed on the material platform.

In the above technical solution, by providing the material rack, a plurality of transfer tanks can be stored, thereby better improving the ability to store the slurry. The transfer tank can also be designed with a plurality of volumes according to actual needs, so that transfer tanks with different volumes can be matched according to actual needs, which can not only meet the storage needs of the slurry, but also flexibly store the slurry, with strong flexibility and good practicability.

In some embodiments of this disclosure, a plurality of material platforms are provided, and the plurality of material platforms are spaced apart in an up-down direction.

Exemplarily, two, three, four, five, or more material platforms can be provided, which is not limited in this disclosure.

In the above technical solution, by providing the plurality of material platforms, each material platform can store the plurality of transfer tanks, which can further improve the ability of the material rack to store the transfer tanks.

Additional aspects and advantages of this disclosure will be partially given in the following description, partially become apparent from the following description, or be learned through practice of this disclosure.

### BRIEF DESCRIPTION OF THE DRAWINGS

The above and/or additional aspects and advantages of this disclosure will become apparent and easily understood from the description of embodiments in conjunction with the following drawings, in which:
FIG. 1 is a schematic diagram of a vehicle according to some embodiments of this disclosure;
FIG. 2 is an isometric view of a transfer assembly having a transfer tank according to some embodiments of this disclosure;
FIG. 3 is a front view of the transfer assembly having a transfer tank according to the embodiment shown in FIG. 2;
FIG. 4 is a schematic diagram with part of a tank body or cover removed according to FIG. 3; and
FIG. 5 is a left side view according to FIG. 4.

Reference numerals in the drawings:
1, vehicle;
1000, battery; 2000, controller; 3000, motor; 100, transfer assembly;
2, transfer tank; 21, tank body; 211, feeding inlet; 212, first handle; 22, cover; 221, second handle; 230, discharging pipe; 24, valve;
23, stirring assembly; 231, pneumatic pump; 232, coupling; 233, stirring blade; 234, output shaft; 235, flow-through hole;
3, material rack; and 31, material platform.

### DESCRIPTION OF EMBODIMENTS

The embodiments of this disclosure are described in detail below, and examples of the embodiments are shown in the drawings, where like or similar reference numerals denote like or similar elements or elements having the same or similar functions throughout. The embodiments described below by reference to the drawings are exemplary, only for explaining this disclosure, and should not be construed as limiting this disclosure.

In the description of this disclosure, it should be understood that the orientation or positional relationship indicated by terms such as "upper", "lower", "front", "rear", "left", and "right" is based on the orientation or positional relationship shown in the drawings, which is only for facilitating the description of this disclosure and simplifying the description, rather than indicating or implying that the means or element referred to must have a specific orientation, be constructed and operated in a specific orientation, and thus should not be construed as limiting this disclosure. In addition, the terms "first" and "second" are only for descriptive purposes, and should not be understood as indicating or implying relative importance or implicitly indicating the number of technical features indicated. Thus, features defined with "first" and "second" may explicitly or implicitly include one or more of the features. In the description of this disclosure, the meaning of "plurality of" is two or more unless otherwise specifically defined.

In the description of this disclosure, it should be noted that, unless otherwise specifically specified and limited, terms such as "mounting", "connecting", and "joining" should be understood in a broad sense. For example, they can be a fixed connection, a detachable connection, or an integral connection; they can be a mechanical connection or an electrical connection; they can be a direct connection or an indirect connection through an intermediary; or they can be the internal communication of two elements or the interaction relationship between two elements. For those of ordinary skill in the art, the specific meanings of the above terms in this disclosure can be understood according to specific situations.

At present, from the development of the market situation, the application of traction batteries is becoming more and more widespread. Traction batteries are not only applied to energy storage power systems such as hydropower, thermal power, wind power, and solar power stations, but also widely applied to electric bicycles, electric motorcycles, electric vehicles, and other electric vehicles, as well as military equipment and aerospace, and other fields. With the continuous expansion of the application fields of traction batteries, their market demand is also continuously increasing. Among the traction batteries currently used, the proportion of lithium-ion batteries is also increasing.

In the production of lithium-ion batteries, both the positive electrode and the negative electrode need a coating process where active substances, conductive agents, binders, and the like are mixed to form a slurry, and then the slurry is uniformly applied to a current collector (usually an aluminum foil for the negative electrode and a copper foil for the positive electrode). The slurry is usually prepared by stirring: the active substance powder, binder, conductive agent, and solvent can be stirred and mixed well in a certain order and under certain conditions to form a stable suspension.

On a continuous production line, the operating speed and production capacity of the coating machine may not completely match the slurry preparation speed, so a transfer tank is often provided on the production line as a transition link. The transfer tank can balance the production differences of upstream and downstream equipment to a certain extent, and maintain the continuous and stable operation of the production line. In addition, the transfer tank can also help the slurry further mature and homogenize, so that various components (such as active substances, conductive agents, binders, and solvents) in the slurry are more uniformly distributed during the standing process, thereby improving the quality of the electrode sheet and the uniformity of battery performance. However, in the related art, after the transfer tank stores the preliminarily mixed slurry from the stirring tank, when the slurry in the transfer tank is used, it is often necessary to transfer the slurry in the transfer tank to a target container, which is likely to cause waste of the slurry.

Based on the above considerations, in order to reduce the waste of the slurry, a transfer tank 2 is designed, the transfer tank 2 includes a tank body 21, the tank body 21 has an accommodating cavity capable of accommodating the slurry, the preliminarily mixed slurry from the stirring tank can be stored in the tank body 21, the cover 22 can close the feeding inlet 211 of the tank body 21, the transfer tank 2 is provided with a discharging pipe 230, and a valve 24 is provided on the discharging pipe 230. When it is necessary to use the slurry stored in the accommodating cavity, the discharging pipe 230 can directly apply the slurry to the surface of the current collector, and then the coating parameters are controlled through doctor blade coating, transfer roller coating, or the like, to better ensure the consistency of the electrode sheet thickness. Thus, not only the coating quality of the electrode sheet can be better ensured, but also the waste of the slurry is reduced, and the production cost is lowered.

The transfer tank 2 disclosed in the embodiments of this disclosure can be configured to coat anode electrode sheets or cathode electrode sheets, the anode electrode sheets, cathode electrode sheets, and separators constitute a cell assembly, the cell assembly can be used for battery cells, and the battery cells can be used as electric apparatuses of power sources, or various energy storage systems using the battery 1000 as energy storage elements. The electric apparatuses can be, but are not limited to, mobile phones, tablets, notebook computers, electric toys, electric tools, electric bicycles, electric vehicles, ships, and aerospace vehicles. The electric toys can include fixed or mobile electric toys, such as game consoles, electric vehicle toys, electric ship toys, and electric aircraft toys. The aerospace vehicles can include airplanes, rockets, space shuttles, spaceships, and the like.

The following embodiments are described by taking an electric apparatus in one embodiment of this disclosure as a vehicle 1 for convenience of explanation.

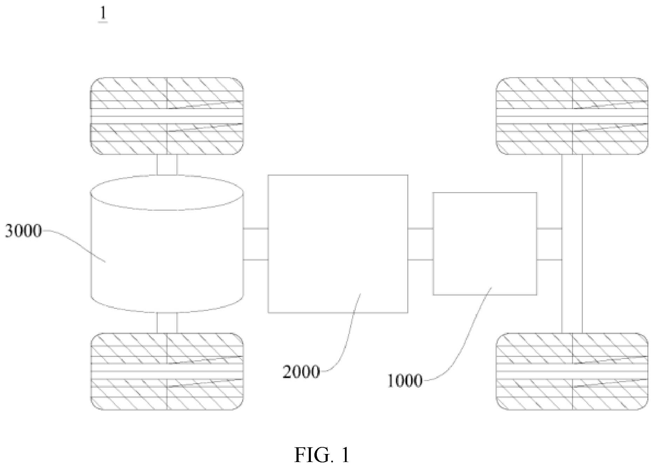

Referring to FIG. 1, FIG. 1 is a schematic diagram of a vehicle 1 provided in some embodiments of this disclosure. The vehicle 1 can be a fuel vehicle, a gas vehicle, or a new energy vehicle, and the new energy vehicle can be a pure electric vehicle, a hybrid vehicle, a range-extended vehicle, or the like. A battery 1000 is provided inside the vehicle 1, and the battery 1000 can be provided at the bottom, head, or tail of the vehicle 1. The battery 1000 can be used for power supply of the vehicle 1, for example, the battery 1000 can serve as an operating power source of the vehicle 1. The vehicle 1 can further include a controller 2000 and a motor 3000, and the controller 2000 is configured to control the battery 1000 to supply power to the motor 3000, for example, for the working power needs of starting, navigation, and running of the vehicle 1.

In some embodiments of this disclosure, the battery 1000 can not only serve as the operating power source of the vehicle 1, but also as the driving power source of the vehicle 1, replacing or partially replacing fuel or natural gas to provide driving power for the vehicle 1.

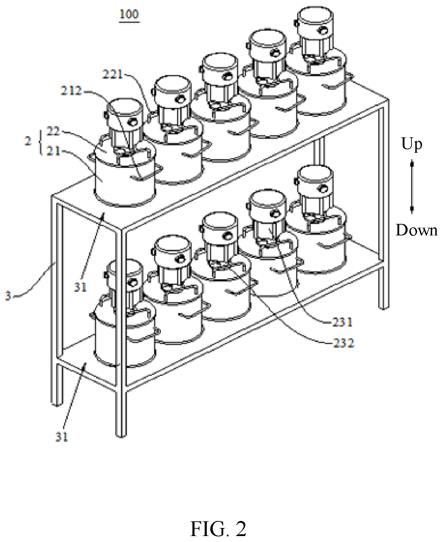

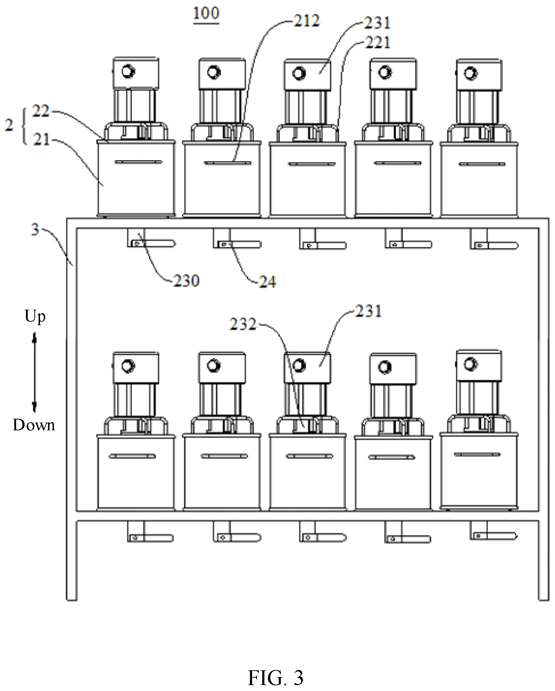

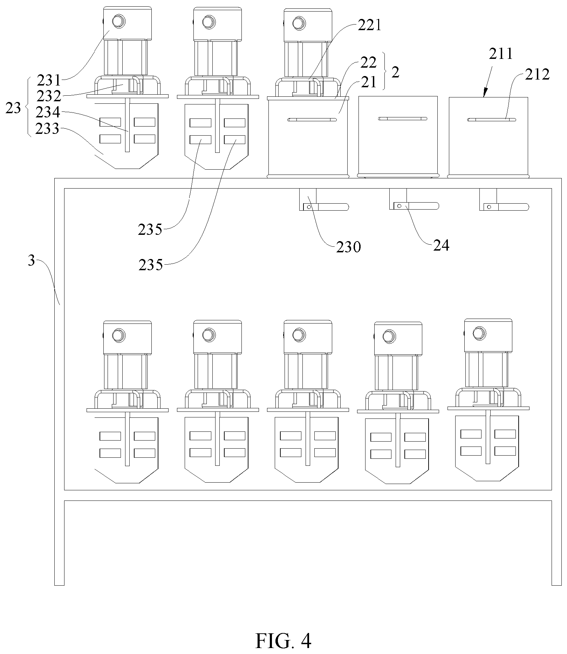

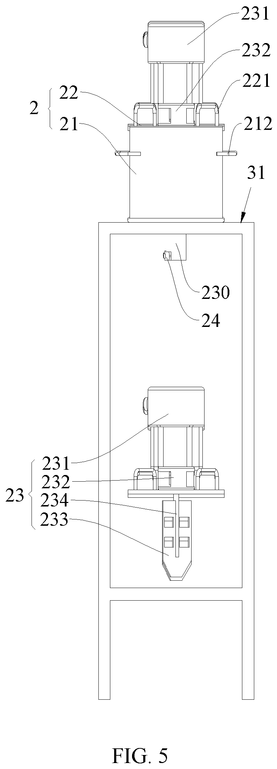

Referring to FIG. 2, FIG. 2 is an isometric view of a transfer assembly 100 having a transfer tank 2 according to some embodiments of this disclosure. The transfer assembly 100 includes a transfer tank 2 and a material rack 3, the material rack 3 is provided with two upper and lower layers of material platforms 31, a plurality of transfer tanks 2 can be placed on each material platform 31, and the transfer tank 2 can be placed on the material platform 31 of the material rack 3, and can also be taken out from the material platform 31. The material platform 31 is provided with through holes. Referring to FIG. 3, FIG. 3 is a front view of the transfer assembly 100 having a transfer tank 2 according to the embodiment shown in FIG. 2. The discharging pipe 230 of the transfer tank 2 can extend from the through hole to the lower end of the material platform 31. FIG. 4 is a schematic diagram with part of the tank body 21 or cover 22 removed according to FIG. 3, and FIG. 5 is a left side view according to FIG. 4.

Exemplarily, the material rack 3 can also have three layers or more than three layers of material platforms 31.

Exemplarily, the transfer tank 2 can be a hollow cylindrical shape or a square cylindrical shape.

Exemplarily, the tank body 21 and the discharging pipe 230 can be an integral piece, and the integral piece refers to an integrated piece of the tank body 21 and the discharging pipe 230 cast by integral molding. The tank body 21 and the discharging pipe 230 can also be the discharging pipe 230 mounted on the tank body 21, meaning that after the tank body 21 and the discharging pipe 230 are cast separately, they can be fixedly connected by a non-detachable method such as welding, or can be fixedly connected by a detachable method such as insertion or screwing.

Referring to FIGs. 2 to 4, a transfer tank 2 according to embodiments of the first aspect of this disclosure includes a tank body 21, a cover 22, and a discharging pipe 230, the tank body 21 has an accommodating cavity, the accommodating cavity has a feeding inlet 211 and a discharging outlet, the cover 22 is detachably mounted at the feeding inlet 211 for opening or closing the feeding inlet 211, the discharging pipe 230 is provided at the discharging outlet, and a valve 24 is provided on the discharging pipe 230 for opening or closing the discharging pipe 230.

Exemplarily, after the slurry is preliminarily mixed in the stirring tank, the slurry can be conveyed from the feeding inlet 211 to the accommodating cavity of the tank body 21, and the cover 22 can cover the feeding inlet 211 for closing the feeding inlet 211 of the accommodating cavity. At this time, the tank body 21 storing the slurry can be transferred to any position, or the tank body 21 storing the slurry can be directly carried to the coating device. As the cover 22 covers the position of the feeding inlet 211, external impurities, dust, microorganisms, and other pollutants can be effectively prevented from entering the transfer tank 2, ensuring that the slurry is not affected. By providing the discharging pipe 230 and the valve 24, the valve 24 can control the on-off of the discharging pipe 230. By controlling the valve 24, the slurry conveyed by the discharging pipe 230 can be directly applied to the electrode sheet. Thus, there is no need to provide a target container, nor to transfer the slurry in the transfer tank 2 to the target container, which can reduce the waste of the slurry during the transfer process, thereby better reducing costs.

Exemplarily, the opening degree of the valve 24 is adjustable, and the flow rate of the slurry in the discharging pipe 230 can be controlled by the valve 24, thereby controlling the thickness and uniformity of the coating on the surface of the electrode sheet, which is beneficial to the consistency and stability of the performance of the battery 1000.

In the above technical solution, by providing the feeding inlet 211 and the cover 22 on the tank body 21, the slurry can be better stored in the tank body 21, and external impurities, dust, microorganisms, and other pollutants can be better prevented from entering the transfer tank 2, ensuring that the slurry is not affected. By providing the discharging pipe 230 and the valve 24, the valve 24 can control the on-off of the discharging pipe 230. By controlling the valve 24, the slurry conveyed by the discharging pipe 230 can be directly applied to the electrode sheet. Thus, there is no need to provide a target container, nor to transfer the slurry in the transfer tank 2 to the target container, which can reduce the waste of the slurry during the transfer process, thereby better reducing costs.

In some embodiments of this disclosure, at least part of a top wall of the tank body 21 is configured to have the feeding inlet 211.

Exemplarily, a part of the top wall of the tank body 21 is the feeding inlet 211, so that the outer peripheral edge of the feeding inlet 211 can have a flange structure formed by the top wall, the flange structure can better support the cover 22, and through the cooperation between the flange structure and the cover 22, the feeding inlet 211 of the tank body 21 can be better closed.

Exemplarily, referring to FIGs. 2 to 4, the tank body 21 has no top wall, that is, the tank body 21 only includes a bottom wall and a peripheral wall surrounding the outer peripheral edge of the bottom wall, and the bottom wall and the peripheral wall define the tank body 21 with an upward opening, this opening being the feeding inlet 211 of the tank body 21. Thus, the size of the feeding inlet 211 of the tank body 21 is larger, which can better allow the slurry to enter the tank body 21 from the feeding inlet 211.

In the above technical solution, by providing the feeding inlet 211 at an upper end of the tank body 21, the slurry can better enter the accommodating cavity, and the slurry can directly enter the tank body 21 in a pouring form, which can produce a stirring effect on the slurry to a certain extent, thereby facilitating more uniform various components in the slurry.

In some embodiments of this disclosure, referring to FIGs. 2 to 4, the discharging outlet is provided in a bottom wall of the tank body 21.

Exemplarily, the tank body 21 includes a bottom wall and a peripheral wall surrounding the outer peripheral edge of the bottom wall, the discharging outlet is provided at the center of the bottom wall, and the bottom wall is inclined downward in the direction from the peripheral wall to the center of the bottom wall, thereby further reducing the residue of the slurry in the tank body 21.

Exemplarily, the discharging outlet can be circular or polygonal.

In the above technical solution, the slurry can be conveyed outward from the bottom, which can better reduce the residue of the slurry in the tank body 21.

In some embodiments of this disclosure, referring to FIGs. 2 to 4, the discharging pipe 230 is a straight pipe extending in an up-down direction.

Exemplarily, the cross-section of the discharging pipe 230 in the horizontal plane can be circular or polygonal, that is, the cross-sectional shape of the discharging pipe 230 is the same as the shape of the discharging outlet, thereby better allowing the slurry to enter the discharging pipe 230 from the discharging outlet, and also better reducing the residue of the slurry in the tank body 21 or the discharging pipe 230.

In the above technical solution, after the slurry enters the discharging pipe 230 from the discharging outlet, it can better flow out from the discharging pipe 230, which can reduce the residue of the slurry in the discharging pipe 230.

In some embodiments of this disclosure, the transfer tank 2 further includes a stirring assembly 23, the stirring assembly 23 is mounted on the cover 22, the stirring assembly 23 includes a driving member and a stirring member provided on an output shaft 234 of the driving member, the driving member is located outside the accommodating cavity, the stirring member is located inside the accommodating cavity, and the driving member is configured to drive the stirring member to operate.

Exemplarily, the cover 22 is provided with a shaft hole, a sealing member can be provided between the shaft hole and the output shaft 234, the driving member is mounted on an upper surface of the cover 22, the output shaft 234 can extend into the accommodating cavity from the shaft hole, and the driving member drives the output shaft 234 to rotate, thereby making the output shaft 234 drive the stirring member to rotate, to stir the slurry in the accommodating cavity.

In the above technical solution, by mounting the stirring assembly 23 on the cover 22, when the cover 22 covers the tank body 21, the stirring member of the stirring assembly 23 directly extends into the accommodating cavity. This is a simple and convenient mounting method. Through the stirring of the stirring member, the slurry can be better prevented from layering after being left standing for a long time; otherwise, such layering affects the uniformity of various components in the slurry.

In some embodiments of this disclosure, referring to FIGs. 2 to 4, the driving member includes: a pneumatic pump 231 and a coupling 232, the coupling 232 being in transmission connection between the pneumatic pump 231 and the output shaft 234.

In the above technical solution, the pneumatic pump 231 is used as the driving mechanism, and the pneumatic pump 231 has a simple structure and is convenient for maintenance. As compared with the driving of a motor, it can reduce the risk of electrical failure. Moreover, the pneumatic pump 231 can control the output flow by adjusting the air source pressure, with good stability. By providing the coupling 232 between the pneumatic pump 231 and the output shaft 234, torque can be better transmitted to the output shaft 234, and the coupling 232 can better ensure the stability between the pneumatic pump 231 and the driving shaft, and can compensate for axial and radial displacements to a certain extent, playing roles such as reducing impact and absorbing vibration.

In some examples of this disclosure, referring to FIGs. 2 to 4, the cover 22 is provided with a second handle 221, two second handles 221 are provided, and the two second handles 221 are respectively provided on two sides of the driving member.

In the above technical solution, the cover 22 can be opened or closed manually, which can reduce mechanical costs. It can be understood that the transfer tank 2 of this disclosure is used only when there is a need to store the slurry, and can be transferred at any time in terms of distance and space. Therefore, there is no need to build an automated device for automatically opening or closing the cover 22, and in the way of manually opening or closing the cover 22, the transfer tank 2 can be more flexibly used to store the slurry.

In some examples of this disclosure, referring to FIGs. 2 to 4, the stirring member includes a stirring blade 233, the stirring blade 233 having a mounting slot penetrating the stirring blade 233 in a thickness direction thereof, the mounting slot extending along an axial direction of the output shaft 234, and the output shaft 234 being inserted into the mounting slot.

In the above technical solution, through the cooperation between the output shaft 234 and the stirring blade 233 in an insertion manner, the assembly manner of the stirring blade 233 and the output shaft 234 is simple, maintenance is convenient, and the output shaft 234 can better drive the stirring blade 233 to rotate.

Exemplarily, referring to FIGs. 2 to 4, the stirring blade 233 is provided with a flow-through hole 235 penetrating its thickness direction, the flow-through hole 235 can be a polygonal hole or a circular hole, and this disclosure does not limit it. By providing the flow-through hole 235 on the stirring blade 233, the stirring pressure of the stirring blade 233 can be reduced, and the flow path of the slurry can be increased, thereby improving the stirring effect on the slurry.

Exemplarily, referring to FIGs. 2 to 4, the stirring blade 233 is symmetrical along an axis of the output shaft 234.

Exemplarily, referring to FIGs. 2 to 4, a plurality of flow-through holes 235 are provided, and the plurality of flow-through holes 235 are symmetrically provided along the axis of the output shaft 234.

In the above technical solution, the stirring blade 233 is symmetrical along the axis of the output shaft 234, a plurality of flow-through holes 235 are provided, and the plurality of flow-through holes 235 are symmetrically provided along the axis of the output shaft 234, which can make the stirring blade 233 stir the slurry in the tank body 21 more uniformly, and can make various components in the slurry more uniformly distributed.

In some embodiments of this disclosure, referring to FIGs. 2 to 4, the tank body 21 is a cylindrical structure.

In the above technical solution, by making the tank body 21 a cylindrical structure, the space for the tank body 21 to accommodate the slurry can be better increased.

Exemplarily, the volume of the accommodating cavity of the tank body 21 can be 2 liters, 3 liters, 4 liters, 5 liters, 10 liters, 15 liters, or the like, and this disclosure does not limit it.

In some embodiments of this disclosure, referring to FIGs. 2 to 4, the tank body 21 is provided with a first handle 212, two first handles 212 are provided, and the two first handles 212 are respectively provided on two sides of the transfer tank 2.

In the above technical solution, by providing the first handle 212 on the tank body 21, the tank body 21 can be better carried manually, and by carrying the tank body 21 manually, flexible transfer of the tank body 21 can be facilitated.

Exemplarily, referring to FIGs. 2 to 4, the second handle 221 and the first handle 212 can both be U-shaped handles.

According to a second aspect, embodiments of this disclosure further provide a coating device, including a transfer assembly 100, the transfer assembly 100 including the transfer tank 2 provided in embodiments of the first aspect of this disclosure, the coating device further including a transfer coater, the transfer coater having a loading platform, and the tank body 21 of the transfer tank 2 being detachably mounted on the loading platform.

Exemplarily, when it is necessary to coat the electrode sheet, the transfer tank 2 can take the slurry from the stirring tank, and then directly place it on the loading platform to coat the electrode sheet.

Exemplarily, the transfer tank 2 can take the slurry from the stirring tank, and then store it in the transfer tank 2, the transfer tank 2 storing the slurry can be placed on the material platform 31, and when it is necessary to coat the electrode sheet, the transfer tank 2 storing the slurry can be directly taken from the material platform 31, thereby meeting the coating needs of the electrode sheet.

Exemplarily, the coating device can use the transfer tank 2 storing the slurry, that is, the transfer tank 2 can be directly placed on the transfer coater of the coating device. After the slurry in one transfer tank 2 is used up, this transfer tank 2 can be directly removed from the transfer coater and replaced with a new transfer tank 2 storing the slurry, thereby meeting the slurry use needs of the transfer coater. Moreover, since there is no need to put the slurry in the transfer tank 2 into a target container, the waste of the slurry can be reduced.

In the above technical solution, since the transfer tank 2 can directly coat the electrode sheet, it can not only reduce the transfer of the slurry, thereby reducing the waste of the slurry during the slurry transfer process and lowering costs, but also increase the feeding method of the coating machine, that is, there is no need to feed the transfer coater in a pipeline manner, and the way of using the transfer tank 2 for feeding can increase the number of simultaneous coatings by the transfer coater. By increasing the number of transfer coaters, the coating efficiency of the electrode sheet can be improved, and the production capacity can be improved.

Referring to FIGs. 2 to 5, the transfer assembly 100 further includes a material rack 3, the material rack 3 has a material platform 31, a plurality of transfer tanks 2 are provided, and the plurality of transfer tanks 2 are placed on the material platform 31.

In the above technical solution, by providing the material rack 3, a plurality of transfer tanks 2 can be stored, thereby better improving the ability to store the slurry. The transfer tank 2 can also be designed with a plurality of volumes according to actual needs, so that transfer tanks 2 with different volumes can be matched according to actual needs, which can not only meet the storage needs of the slurry, but also flexibly store the slurry, with strong flexibility and good practicability.

In some embodiments of this disclosure, a plurality of material platforms 31 are provided, and the plurality of material platforms 31 are spaced apart in an up-down direction.

Exemplarily, two, three, four, five, or more material platforms 31 can be provided, and this disclosure does not limit it.

In the above technical solution, by providing a plurality of material platforms 31, a plurality of transfer tanks 2 can be stored on each material platform 31, which can further improve the ability of the material rack 3 to store the transfer tanks 2.

A transfer tank 2 and a transfer assembly 100 having the same according to a specific embodiment of this disclosure are described below with reference to FIGs. 2 to 5.

Referring to FIGs. 2 to 5, the transfer assembly 100 includes a transfer tank 2 and a material rack 3, the material rack 3 has a material platform 31, a plurality of transfer tanks 2 are provided, the plurality of transfer tanks 2 are placed on the material platform 31, a plurality of material platforms 31 are provided, and the plurality of material platforms 31 are spaced apart in an up-down direction.

The transfer tank 2 includes a tank body 21, a cover 22, and a discharging pipe 230, the tank body 21 has an accommodating cavity, the accommodating cavity has a feeding inlet 211 and a discharging outlet, the cover 22 is detachably mounted at the feeding inlet 211, the cover 22 is configured to open or close the feeding inlet 211, the discharging pipe 230 is provided at the discharging outlet, and a valve 24 is provided on the discharging pipe 230, the valve 24 being configured to open or close the discharging pipe 230.

The tank body 21 is cylindrical with an upward opening, and the opening of the tank body 21 is the feeding inlet 211. The discharging outlet is provided in a bottom wall of the tank body 21, the discharging pipe 230 is provided at the discharging outlet, and the discharging pipe 230 is a straight pipe extending in an up-down direction.

The transfer tank 2 further includes a stirring assembly 23, the stirring assembly 23 is mounted on the cover 22, the stirring assembly 23 includes a driving member and a stirring member provided on an output shaft 234 of the driving member, the driving member is located outside the accommodating cavity, the stirring member is located inside the accommodating cavity, and the driving member is configured to drive the stirring member to operate.

The driving member includes a pneumatic pump 231 and a coupling 232, the coupling 232 being in transmission connection between the pneumatic pump 231 and the output shaft 234.

The cover 22 is provided with a second handle 221, two second handles 221 are provided, and the two second handles 221 are respectively provided on two sides of the driving member.

The stirring member includes a stirring blade 233, the stirring blade 233 having a mounting slot penetrating the stirring blade 233 in a thickness direction thereof, the mounting slot extending along an axial direction of the output shaft 234, and the output shaft 234 being inserted into the mounting slot.

The stirring blade 233 is symmetrical along an axis of the output shaft 234.

The tank body 21 is provided with a first handle 212, two first handles 212 are provided, and the two first handles 212 are respectively provided on two sides of the transfer tank 2.

In the description of this specification, descriptions referring to terms such as "some embodiments", "optionally", "further", or "some examples" mean that specific features, structures, materials, or characteristics described in combination with the embodiment or example are included in at least one embodiment or example of this disclosure. In this specification, the schematic representations of the above terms do not necessarily refer to the same embodiment or example. Moreover, the described specific features, structures, materials, or characteristics can be combined in any one or more embodiments or examples in an appropriate manner.

Although the embodiments of this disclosure have been shown and described, those of ordinary skill in the art can understand that: various changes, modifications, alterations, and variations can be made to these embodiments without departing from the principles and spirit of this disclosure, and the scope of this disclosure is defined by the claims and their equivalents.

## Claims

1. A transfer tank (2), comprising:
a tank body (21), the tank body (21) having an accommodating cavity, the accommodating cavity having a feeding inlet (211) and a discharging outlet, and the tank body (21) being provided with a first handle (212);
a cover (22), the cover (22) being detachably mounted at the feeding inlet (211) for opening or closing the feeding inlet (211); and
a discharging pipe (230), the discharging pipe (230) being provided at the discharging outlet, and a valve (24) being provided on the discharging pipe (230) for opening or closing the discharging pipe (230).

2. The transfer tank (2) according to claim 1, wherein at least part of a top wall of the tank body (21) is configured to have the feeding inlet (211).

3. The transfer tank (2) according to claim 1 or 2, wherein the discharging outlet is provided in a bottom wall of the tank body (21).

4. The transfer tank (2) according to claim 3, wherein the discharging pipe (230) is a straight pipe extending in an up-down direction.

5. The transfer tank (2) according to any one of claims 1 to 4, wherein the transfer tank (2) further comprises: a stirring assembly (23), the stirring assembly (23) is mounted on the cover (22), the stirring assembly (23) comprises a driving member and a stirring member provided on an output shaft (234) of the driving member, the driving member is located outside the accommodating cavity, the stirring member is located inside the accommodating cavity, and the driving member is configured to drive the stirring member to operate.

6. The transfer tank (2) according to claim 5, wherein the driving member comprises: a pneumatic pump (231) and a coupling (232), the coupling (232) being in transmission connection between the pneumatic pump (231) and the output shaft (234).

7. The transfer tank (2) according to claim 5, wherein the cover (22) is provided with a second handle (221), two second handles (221) are provided, and the two second handles (221) are respectively provided on two sides of the driving member.

8. The transfer tank (2) according to claim 5, wherein the stirring member comprises a stirring blade (233), the stirring blade (233) having a mounting slot penetrating the stirring blade (233) in a thickness direction thereof, the mounting slot extending along an axial direction of the output shaft (234), and the output shaft (234) being inserted into the mounting slot.

9. The transfer tank (2) according to claim 8, wherein the stirring blade (233) is symmetrical along an axis of the output shaft (234).

10. The transfer tank (2) according to any one of claims 1 to 10, wherein the tank body (21) is a cylindrical structure.

11. The transfer tank (2) according to any one of claims 1 to 11, wherein two first handles (212) are provided, and the two first handles (212) are respectively provided on two sides of the transfer tank (2).

12. A coating device, comprising:
a transfer assembly (100), the transfer assembly (100) comprising: the transfer tank (2) according to any one of claims 1 to 11; and
a transfer coater, the transfer coater having a loading platform, and the tank body (21) of the transfer tank (2) being detachably mounted on the loading platform.

13. The coating device according to claim 12, wherein the transfer assembly (100) further comprises:
a material rack (3), the material rack (3) having a material platform (31), a plurality of transfer tanks (2) being provided, and the plurality of transfer tanks (2) being placed on the material platform (31).

14. The coating device according to claim 13, wherein a plurality of material platforms (31) are provided, and the plurality of material platforms (31) are spaced apart in an up-down direction.
